# EUROPÄISCHE PATENTSCHRIFT

(11) **EP 3 431 841 B1**
(45) Veröffentlichungstag und Bekanntmachung des Hinweises auf die Patenterteilung: **30.08.2023**
(21) Anmeldenummer: 18184253.5
(22) Anmeldetag: 18.07.2018
(51) Int. Cl.: F16K 1/42, F16K 3/26, F16K 3/24, F16K 47/08, F16K 1/46

(54) **VENTILKOMPONENTENANORDNUNG UND STELLVENTIL MIT EINER VENTILKOMPONENTENANORDNUNG**
VALVE COMPONENT ARRANGEMENT AND CONTROL VALVE HAVING A VALVE COMPONENT ARRANGEMENT
DISPOSITIF COMPOSANT DE SOUPAPE ET SOUPAPE DE COMMANDE DOTÉ D'UN COMPOSANT DE SOUPAPE

(30) Priorität: 19.07.2017 DE 202017104280 U
(43) Veröffentlichungstag der Anmeldung: 23.01.2019
(73) Patentinhaber: Samson Aktiengesellschaft, 60314 Frankfurt am Main (DE)
(72) Erfinder: Sander, Andreas, 69514 Laudenbach (DE)
(74) Vertreter: Schmid, Nils T.F.

(56) Entgegenhaltungen:
- DE-U1-202016 105 250
- US-A- 1 770 112
- US-A1- 2009 218 536
- US-A1- 2014 264 135
- US-A1- 2014 264 138

## Beschreibung

Die Erfindung betrifft ein Stellventil mit einer Ventilkomponentenanordnung. Stellventile dienen zum Einstellen einer Prozessfluidströmung einer prozesstechnischen Anlage, beispielsweise einer petrochemischen Anlage, einer Lebensmittel verarbeitenden Anlage, wie einer Brauerei, einem Kraftwerk oder dergleichen.

Ein Stellventil der gattungsgemäßen Art dient dazu, eine Prozessfluidströmung der prozesstechnischen Anlage einzustellen. Dabei kann das Stellventil einem pneumatischen Stellungsregler zugeordnet sein, der mittels einer pneumatischen Hilfsenergie einen pneumatischen Antrieb steuert, welcher ein Stellventilglied in eine gewünschte Stellposition verbringen kann.

Ein Stellventil ist beispielsweise bekannt aus DE 10 2015 009 421 A1. Es umfasst ein Ventilgehäuse und einen darin eingesetzten Ventilkäfig, an dem ein Ventilsitz festgelegt ist. Innerhalb des Ventilkäfigs ist ein Ventilglied beweglich gelagert, um einen Durchgang des Stellventils zu weiten oder zu verengen, um so die Prozessfluidströmung einzustellen. Das Ventilgehäuse hat einen Abschnitt mit einem sich in Radialrichtung nach innen erstreckenden Absatz, der zusammen mit einem radial nach außen weisenden Absatz des Ventilsitzes eine im Querschnitt rechteckige Dichtungsaufnahme bildet. In der Dichtungsaufnahme ist eine Dichtung angeordnet, die einen im Querschnitt gabelförmigen Dichtungskörper mit zwei Zinken und einer radialen Spreizfeder umfasst. In Axialrichtung ist die Dichtung zentral innerhalb der Dichtungsaufnahme mit Axialabständen zu den gegenüberliegenden Seitenflanken der Absätze angeordnet, so dass die Dichtung selbst bei einer Wärmeausdehnung in Axialrichtung stets innerhalb der Aufnahme beweglich bleibt. In Radialrichtung ist die Dichtung durch den Spreizring sowie gegebenenfalls eine Unter- oder Überdimensionierung der radialen Wandungen der Aufnahme eingespannt.

Diese Dichtung ist einfach in der Montage und dichtet bei normalen Betriebsbedingungen mit großer Zuverlässigkeit ab. Es hat sich allerdings gezeigt, dass bei extremen Betriebsbedingungen, bei denen zwischen dem Ein- und dem Ausgang des Stellventils große Druck- und/oder Temperaturunterschiede auftreten, die bekannte Dichtung keine optimale Dichtwirkung mehr bereitzustellen vermag.

US 2014/0264135 A1 und US 2014/026138 A1 betreffen Ventilsitzanordnungen.

US 2009/0218536 A1 betrifft ein Stellventil für Hochtemperaturanwendungen.

DE 20 2016 105 250 U1 betrifft ein Stellventil mit einer Dichtungseinrichtung und einem plastisch deformierbaren Dichtring zur Abdichtung eines ersten und eines zweiten Ventilbauteils.

Es besteht daher der Wunsch nach einer Dichtung für ein Stellventil mit Ventilkäfig, welcher bei möglichst einfacher Montage eine Dichtwirkung selbst unter extremsten Bedingungen bereitzustellen vermag. Ferner ist bei dem bekannten Stellgerät beim Einsatz mit aggressiven Prozessfluidmedien der Bedarf aufgetreten, die Dichtung in regelmäßigen Intervallen zu ersetzen. Dank der Axialabschnitte zwischen der Dichtung und den gegenüberliegenden Absätzen kann zwischen dem Ventilgehäuse und dem Dichtring ein Werkzeug eingeführt werden, um die Dichtung aus dem Gehäuse zu entnehmen. Allerdings ist diese Art der Entnahme insbesondere für ungeübtes Montagepersonal nicht einfach und kann zur Beschädigung des Ventilgehäuses führen, was im späteren Betrieb zu Undichtigkeiten führen kann. Es besteht daher der Wunsch, eine Möglichkeit zur Entnahme einer Dichtung bei einem gattungsgemäßen Stellventil bereitzustellen, die eine Beschädigung am Dichtventil vermeidet.

Es ist eine Aufgabe der Erfindung, eine Ventilkomponentenanordnung bereitzustellen, die die Nachteile des Standes der Technik überwindet und die insbesondere einfach zu montieren ist und sich selbst unter Extrembedingungen sicher abdichten lässt.

Diese Aufgabe löst der Gegenstand von Anspruch 1.

Demnach ist eine Ventilkomponentenanordnung für ein Stellgerät zum Einstellen einer Prozessfluidströmung einer prozesstechnischen Anlage vorgesehen, wobei das Stellventil ein Ventilgehäuse mit einem Einlass und einem Auslass für die Prozessfluidströmung aufweist. Die Ventilkomponentenanordnung umfasst einen Ventilgehäuseabschnitt mit einem sich entlang einer Längsachse erstreckenden Durchgang für die Prozessfluidströmung. Der Durchgang ist in Fluidströmungsrichtung zwischen dem Einlass und dem Auslass des Ventilgehäuses vorgesehen. Der Durchgang kann durch ein Ventilglied des Stellventils verschlossen werden. Die Ventilkomponentenanordnung umfasst ferner eine an dem Ventilgehäuseabschnitt montierbare Ventilkomponente. Die Ventilkomponente kann realisiert sein durch einen Ventilsitz und/oder einen Ventilkäfig. Das Stellventil kann durch einen dichtenden Kontakteingriff zwischen dem Ventilsitz und einem damit kooperierenden Ventilglied verschlossen werden. Wenn das Ventilglied aus einer solchen Schließstellung in eine Öffnungsstellung verfährt, kann ein Ventilkäfig vorgesehen sein, der eine stromabwärts oder stromaufwärts des Durchgangs angeordneten Prozessfluid-Durchtrittsfläche zumindest teilweise versperrt, um eine Drosselwirkung bereitzustellen. Es ist auch denkbar, dass ein Ventilglied ohne Ventilsitz ausschließlich mit einem Ventilkäfig kooperiert, wobei Ventilglied und Ventilkäfig derart formangepasst sind, dass in wenigstens einer Stellung des Ventilglieds relativ zu dem Ventilkäfig eine Dichtwirkung bereitgestellt ist. Ferner umfasst die Ventilkomponentenanordnung eine Dichtung zum umfänglichen Abdichten zwischen dem Ventilgehäuseabschnitt und der Ventilkomponente. Die Dichtung ist vorzugsweise als Ringdichtung realisiert, beispielsweise als O-Ring, X-Ring oder dergleichen. Vorzugsweise ist die Dichtung besonders temperatur- und/oder chemikalienbeständig ausgestaltet. Insbesondere kann die Dichtung als Graphitdichtung realisiert sein.

Die Ventilkomponentenanordnung umfasst außerdem ein Anpress-Widerlager, das in Axialrichtung zwischen der Dichtung und dem Ventilgehäuseabschnitt anzuordnen ist und das in einem Vormontagezustand relativ zu dem Ventilgehäuseabschnitt und relativ zu der Ventilkomponente beweglich ist. Das Anpress-Widerlager kann ein- oder mehrteilig ausgestaltet sein. Vorzugsweise ist das Anpress-Widerlager ringförmig mit einem Durchmesser, der im Wesentlichen dem Durchmesser der Dichtung und/oder einer Dichtungsaufnahme entspricht. Vorzugsweise ist das Anpress-Widerlager in Axialrichtung gleitbeweglich relativ zu der Ventilkomponente. Das Anpress-Widerlager kann an der Ventilkomponente mit einer Axiallagerung gehalten sein.

Die Ventilkomponentenanordnung kann sich in einem Vormontagezustand befinden, in dem beispielsweise die Ventilkomponente nicht in das Ventilgehäuse eingesetzt ist und insbesondere sich nicht in einem axialen Berührkontakt mit dem Ventilgehäuseabschnitt befindet. In dem Vormontagezustand ist zumindest ein Ringspalt in Axialrichtung zwischen dem Ventilgehäuseabschnitt und der Ventilkomponente vorhanden. In einem Montagezustand der Ventilkomponentenanordnung befindet sich die Ventilkomponente an dem Durchgang in einem axialen Berührkontakt mit dem Ventilgehäuseabschnitt. Vorzugsweise besteht in dem Montagezustand in Axialrichtung ein Berührkontakt zwischen dem Ventilgehäuseabschnitt und einer Ventilkomponente, vorzugsweise einem Ventilsitz. Insbesondere kann in dem Montagezustand der Ventilkomponentenanordnung in Radialrichtung ein umfänglicher Berührkontakt zwischen der wenigstens einen Ventilkomponente, beispielsweise einem Ventilsitz und/oder einem Ventilkäfig, und einem Ventilgehäuseabschnitt realisiert sein. Vorzugsweise kann der Ventilgehäuseabschnitt einen insbesondere stufenartigen Flanschrand aufweisen, der sich umfänglich um den Durchgang ausdehnt und der einen axialen Montageanschlag für wenigstens eine Ventilkomponente bilden kann.

Erfindungsgemäß ist in einem Montagezustand der Ventilkomponentenanordnung die Dichtung eingesetzt in eine ringnutförmige Dichtungsaufnahme, die von der Ventilkomponente, also beispielsweise dem Ventilsitz und/oder dem Ventilkäfig, dem Ventilgehäuseabschnitt und dem Anpress-Widerlager begrenzt ist. Beispielsweise ist in dem Montagezustand in Axialrichtung die Dichtungsaufnahme einerseits durch das Anpress-Widerlager und andererseits durch die Ventilkomponente begrenzt. In dem Montagezustand ist vorzugsweise die ringnutförmige Dichtungsaufnahme in Radialrichtung innen von der Ventilkomponente und außen von dem Ventilgehäuseabschnitt begrenzt. In dem Montagezustand befindet sich vorzugsweise das Anpress-Widerlager in Axialrichtung zwischen dem Ventilgehäuse und der Dichtungsaufnahme bzw. der darin aufgenommenen Dichtung. In Radialrichtung befindet sich im Montagezustand das Anpress-Widerlager vorzugsweise zwischen der Ventilkomponente und dem Ventilgehäuseabschnitt.

Das Anpress-Widerlager kann alternativ ortsfest an dem Ventilgehäuseabschnitt angeordnet sein in dem Bereich, in welchen die Ventilkomponente eingesetzt wird. In dem Vormontagezustand ist bei einer solchen Ausführung die Dichtung beispielsweise durch einen axialen Stirnwandabschnitt und einem radialen Umfangsabschnitt der Ventilkomponente gehalten und kommt erst beim Montieren der Ventilkomponente an dem Ventilgehäuseabschnitt in einen Berührkontakt mit dem Ventilgehäuseabschnitt und dem Anpress-Widerlager.

Erfindungsgemäß sind der Ventilgehäuseabschnitt, die Ventilkomponente und das Anpress-Widerlager derart aufeinander abgestimmt, insbesondere dimensioniert, angeordnet und/oder, vorzugsweise das Anpress-Widerlager an der Ventilkomponente, gelagert, dass sich die Dichtungsaufnahme beim Montieren der Ventilkomponente an den Ventilgehäuseabschnitt vorzugsweise in axialer Richtung verkleinert. Das Montieren der Ventilkomponente an den Ventilgehäuseabschnitt beschreibt den Zustandsübergang von dem Vormontagezustand in den Montagezustand. Vorzugsweise ist das Anpress-Widerlager an der Ventilkomponente gelagert. Zwischen dem Anpress-Widerlager und der Ventilkomponente kann in radialer Richtung eine Spielpassung und/oder eine Gleitpassung vorgesehen sein, die vorzugsweise eine Bewegung des Anpress-Widerlagers relativ zu der Ventilkomponente in axialer Richtung zulässt. Die Lagerung des Anpress-Widerlagers an der Ventilkomponente kann eine Verliersicherung des Anpress-Widerlagers relativ zu der Ventilkomponente realisieren. Zwischen dem Anpress-Widerlager und dem Ventilgehäuseabstand kann in radialer Richtung eine Gleit- und/oder Spielpassung vorgesehen sein. In radialer Richtung zwischen der Ventilkomponente und dem Ventilgehäuseabstand ist vorzugsweise eine Passung vorgesehen, die als Gleitpassung, Spielpassung, oder als Presspassung realisiert sein kann. Es ist auch denkbar, dass in radialer Richtung keine Kontaktfläche zwischen dem Ventilgehäuseabschnitt und der Ventilkomponente vorgesehen ist; beispielsweise können in radialer Richtung zwischen der Ventilkomponente und dem Ventilgehäuseabschnitt das Anpress-Widerlager und die Dichtung derart zwischengeordnet sein, dass mit diesen Komponenten ein mittelbarer Kontakt zwischen der Ventilkomponente und dem Ventilgehäuseabschnitt realisiert ist, ohne dass sich die letztgenannten Komponenten unmittelbar berühren. Dabei ist das Anpress-Widerlager während des Montierens der Ventilkomponente an den Ventilgehäuseabschnitt zumindest zeitweise an dem Ventilgehäuse abgestützt, insbesondere zumindest in dem Zeitraum, während dem sich die Dichtungsaufnahme verkleinert, und wobei das Anpress-Widerlager eine Relativbewegung bezüglich der Ventilkomponente erfährt.

Beispielsweise kann das Anpress-Widerlager aufliegen auf einer flanschartigen radialen Auskragung des Ventilgehäuseabschnitts, während die Ventilkomponente in axialer Richtung eingesetzt wird, sodass das Anpress-Widerlager in axialer Richtung ortsfest ist, während eine Bewegung der Ventilkomponente in axialer Richtung erfolgt. Es kann beispielsweise vorgesehen sein, dass in dem montierten Zustand das Anpress-Widerlager und die Ventilkomponente in axialer Richtung auf derselben Höhe auf der Innenauskragung des Ventilgehäuseabschnitts aufsitzen, wobei in einem Vormontagezustand das Anpress-Widerlager in axialer Richtung relativ zu der Ventilkomponente vorsteht, sodass bei axialem Einsetzen der Ventilkomponente mit daran gehaltenem Anpress-Widerlager letzteres zuerst in Berührkontakt mit dem Ventilgehäuseabschnitt gelangt und durch diesen ortsfest gehalten wird, während noch eine weitergehende Montagebewegung der Ventilkomponente in axialer Richtung erfolgt. Es ist auch denkbar, dass die Ventilkomponente in axialer Richtung stufenartig gestaltet ist und dadurch gewährleistet ist, dass bei einer vorzugsweise kontinuierlichen axialen Montageeinsetzbewegung der Ventilkomponente mit daran gehaltenem Ahpress-Widerlagers zunächst ein Berührkontakt in axialer Richtung zwischen dem Anpress-Widerlager und dem Ventilgehäuseabschnitt erfolgt und anschließend ein Berührkontakt in axialer Richtung zwischen der Ventilkomponente und dem Ventilgehäuseabschnitt eintritt. Auf diese Weise kann gewährleistet werden, dass mit einer einzigen einfachen translatorischen Montagebewegung der Ventilkomponente in axialer Richtung, insbesondere beim Einsetzten der Ventilkomponente in das Ventilgehäuse, eine Verpressung der Dichtung mithilfe des Anpress-Widerlagers einhergeht.

Beispielsweise kann das Anpress-Widerlager dazu ausgelegt sein, sich beim Montieren der Ventilkomponente an dem Ventilgehäuseabschnitt, also insbesondere beim Einsetzen der Ventilkomponente in das Ventilgehäuse und bis zum axialen Inkontaktbringen der Ventilkomponente mit dem Ventilgehäuseabschnitt, direkt oder indirekt, zur abschließenden Montage und dem Erreichen des Betriebszustandes, derart an dem Ventilgehäuseabschnitt abzustützen und eine Relativbewegung bezüglich der Ventilkomponente zu erfahren, dass die Dichtungsaufnahme verkleinert wird. Beim Montieren der Ventilkomponente in dem Stellventil vollzieht sich eine Relativbewegung insbesondere zwischen dem Anpress-Widerlager und der Ventilkomponente in Axialrichtung, so dass der Aufnahmeraum, welcher von der Dichtungsaufnahme für die Dichtung bereitgestellt ist, in Axialrichtung verringert wird.

Beispielsweise in einem Vormontagezustand, in welchem die Ventilkomponentenanordnung nicht in dem Ventilgehäuseabschnitt sitzt, kann die Dichtung aufgenommen sein in einer ringnutartigen Öffnung, die vorzugsweise umfänglich um die Ventilkomponente gebildet ist, insbesondere zwischen einer radialen Außenwand der Ventilkomponente, einem axialen Stirnwandabschnitt der Ventilkomponente, beispielsweise einer ringförmigen Anlageschulter, einem Anlageflansch oder dergleichen, sowie gegenüberliegend zu dem axialen Stirnwandabschnitt der Ventilkomponente an dem Anpress-Widerlager. Wie zuvor erwähnt kann das Anpress-Widerlager axial beweglich an der Ventilkomponente gelagert sein, wobei die Lagerung die Beweglichkeit des Anpress-Widerlagers relativ zu der Ventilkomponente begrenzen kann. Die axiale Relativbeweglichkeit kann vorzugsweise auf eine Strecke von weniger als 20 mm, weniger als 10 mm, weniger als 5 mm oder sogar weniger als 1 mm begrenzt sein.

Die Auslegung des Anpress-Widerlagers für eine Relativbewegung bezüglich der Ventilkomponenten bei deren Montage an dem Ventilgehäuseabschnitt kann insbesondere zum Verpressen der Dichtung erfolgen, vorzugsweise zum Komprimieren der Dichtung in Axialrichtung. Bei dem Verpressen der Dichtung mit Hilfe des Anpress-Widerlagers kann ein Aufweiten der Dichtung in Radialrichtung einhergehen. Vorzugsweise ist die Dichtung relativ zu der Dichtungsaufnahme derart bemessen, dass das Volumen der Dichtung in dem Endmontagezustand der Ventilkomponentenanordnung nicht kleiner ist als das Volumen der Dichtungsaufnahme in dem Endmontagezustand. Auf diese Weise kann gewährleistet werden, dass die Dichtungskomponente sowohl in Axialrichtung als auch in Radialrichtung einen Dichtkontakt bereitstellt. Insbesondere kann eine Abdichtung sicher zwischen der Ventilkomponente und dem Ventilgehäuseabschnitt gewährleistet sein, so dass das Prozessfluid bei geschlossenem Stellventil nicht zwischen dem Einlass und dem Auslass fließen kann. Indem eine Dichtung bereitgestellt ist, deren Volumen wenigstens genauso groß ist wie das Volumen der verkleinerten Dichtungsaufnahme in dem Endmontagezustand, wird durch die Montage der Ventilkomponentenanordnung eine radiale und/oder axiale, vorzugsweise isometrische, Druckspannung in der Dichtung erreicht. Die im montierten Zustand vorliegende Druckspannung geht einher mit einer entsprechenden Druckkraft der Dichtkomponente gegen die Kontaktflächen an der Ventilkomponente, dem Anpress-Widerlager und/oder dem Ventilgehäuseabschnitt, so dass mit der Verpressung der Dichtung eine erhöhte Dichtwirkung erreicht werden kann. Um eine einfache Montage ohne Beschädigung der Dichtung zu gewährleisten, kann die Dichtung derart bemessen sein, dass das Volumen in dem Vormontagezustand der Ventilkomponentenanordnung nicht größer ist als das Doppelte, vorzugsweise nicht größer ist als das 1,5-fache, insbesondere nicht größer ist als das 1,1-fache, des Endmontage-Aufnahmevolumens, das begrenzt ist durch die Ventilkomponente und das Anpress-Widerlager.

Gemäß einer bevorzugten Ausführung einer erfindungsgemäßen Ventilkomponentenanordnung umfasst dieser einen insbesondere ortsfest an der Ventilkomponente festgelegten Mitnehmer, der dazu ausgelegt ist, bei Demontage der Ventilkomponente die Dichtung mit der Ventilkomponente mitzunehmen. Der an der Ventilkomponente festgelegte Mitnehmer kann relativ zu dem Anpress-Widerlager beweglich sein. Wie nachfolgend noch im Detail beschrieben, ist es auch denkbar, das Anpress-Widerlager und den Mitnehmer in Funktionsunion oder Bauteileinheit realisiert sein. Das Vorsehen eines solchen Mitnehmers vermeidet ein axiales Festhaften der Dichtung an dem Ventilgehäuseabschnitt. Der Mitnehmer für die Dichtung vereinfacht die Demontage der Dichtung, insbesondere des Dichtrings, von dem Ventilgehäuseabschnitt, und macht einen zusätzlichen Demontageschritt nach dem Entnehmen der Ventilkomponente von dem Ventilgehäuseabschnitt einzig zum Entnehmen der Dichtung obsolet.

Gemäß einer anderen bevorzugten Ausführung einer Ventilkomponentenanordnung ist das Anpress-Widerlager durch einen Mitnehmer, insbesondere den zuvor beschriebenen Mitnehmer für die Dichtung, axial beweglich an der Ventilkomponente gehalten. Insbesondere kann der Mitnehmer dazu ausgelegt sein, bei Demontage der Ventillkomponente das Anpress-Widerlager und gegebenenfalls die Dichtung mit der Ventillkomponente mitzunehmen. Ein solcher Mitnehmer realisiert insofern auch eine Verliersicherung und eine Positioniersicherung für das Anpress-Widerlager. Das Anpress-Widerlager kann von einem Mitnehmer, der ortsfest an der Ventilkomponente festgelegt ist, einen Mitnahmeeffekt zur Dichtung übermitteln.

Gemäß einer Weiterbildung einer erfindungsgemäßen Ventilkomponentenanordnung ist das Anpress-Widerlager und/oder der Mitnehmer durch wenigstens eine in Axialrichtung lösbare Verbindung an der Ventilkomponente gehalten, wie eine Gewindepaarung oder eine Bajonettverbindung. Eine solche Verbindung vereinfacht die Montage des Mitnehmers und/oder des Widerlagers sowie gegebenenfalls der Dichtung an der Ventilkomponente insbesondere in ihren von dem Ventilgehäuse entnommenen Vormontagezustand.

Gemäß einer anderen Weiterbildung einer erfindungsgemäßen Ventilkomponentenanordnung, welche mit der vorherigen kombinierbar ist, ist das Anpress-Widerlager und/oder der Mitnehmer durch eine in Radialrichtung lösbare Verbindung an der Ventilkomponente, beispielsweise mit Stiften, Hinterschneidungen oder ähnlichem, gehalten. Beispielsweise kann der eigentliche Mitnehmer als Stift in Radialrichtung durch ein ringartiges Anpress-Widerlager in dem Körper der Ventilkomponente getrieben sein, wobei mehrere Stifte umfänglich verteilte vorgesehen sein können, beispielsweise zwei, drei, vier, fünf oder mehr, die eine Verliersicherung des Anpress-Widerlagers relativ zu der Ventilkomponente realisieren und eine Axialbeweglichkeit in begrenztem Umfang des Anpress-Widerlagers relativ zu der Komponente zulassen. Es ist auch denkbar, dass beispielsweise ein aus mehreren Teilringabschnitten gebildetes Anpress-Widerlager durch Hinterschneidungen, die in formkomplementäre Ausbuchtungen an dem Ventilkörper greifen, radial einsetzbar ist. Derartige Teilkreisabschnitte sollten für eine einfache Montage höchstens einen 180°-Teilkreisabschnitt realisieren.

Gemäß einer weiteren, mit den vorherigen kombinierbaren Weiterbildungen einer erfindungsgemäßen Ventilkomponentenanordnung weist der Mitnehmer wenigstens ein radiales von der Ventilkomponente abstehendes Eingriffsteil auf, wie einen Stift, eine Nase, ein Außengewinde oder einen Flanschvorsprung. Bei dieser Weiterbildung weist das Anpress-Widerlager wenigstens eine axiale Hinterschneidung, insbesondere eine zu dem wenigstens einen Eingriffsteil formkomplementäre Ausnehmung, zum Aufnehmen des Eingriffsteils auf, welche in Axialrichtung größer ist als das aufgenommene Eingriffsteil. Die Übergröße in Axialrichtung kann eine Spaltbreite definieren, welche die Beweglichkeit des Anpress-Widerlagers in Axialrichtung relativ zu der Ventilkomponente bereitstellt. Beispielsweise kann das Anpress-Widerlager einen in Radialrichtung nach innen weisenden Kragen aufweisen und die Ventilkomponente einen in Radialrichtung nach außen weisenden Kragen, die in Axialrichtung betrachtet einander zumindest teilweise überdecken, so dass eine Hinterschneidung realisiert ist.

Gemäß einer bevorzugten Ausführung einer erfindungsgemäßen Ventilkomponentenanordnung ist das Anpress-Widerlager ringförmig. Das ringförmige Anpress-Widerlager kann einstückig, also als vollumfänglicher Ring, oder mehrteilig aus Teilkreisabschnitten bestehend realisiert sein, wobei vorzugsweise die Teilkreisabschnitte sich zu einem vollumfänglichen Ringabschnitt zusammenfügen lassen. Vorzugsweise ist das Anpress-Widerlager zweiteilig aus Halbkreisabschnitten gebildet.

Gemäß einer bevorzugten Ausführung einer Ventilkomponentenanordnung ist die Ventilkomponente durch einen Ventilkäfig realisiert und das Anpress-Widerlager einstückig mit einem Ventilsitz gebildet. Auf diese Weise können bei relativ einfacher Herstellbarkeit der unabhängig voneinander fertigbaren Teile Ventilkäfig und Ventilsitz geringe Toleranzen der jeweiligen Dichtflächen kostengünstig realisiert und durch das gesonderte Anordnen des Anpress-Widerlagers, welches einstückig mit dem Ventilsitz realisiert ist, eine einfache Montierbarkeit der kombinierten Ventilkomponenten in dem Ventilgehäuse erreicht werden.

Bei einem Aspekt der Erfindung, der auch mit den oben genannten Erfindungsgegenständen kombinierbar ist, ist eine Ventilkomponentenanordnung für ein Stellventil zum Einstellen einer Prozessfluidströmung einer prozesstechnischen Anlage, wie einer verfahrenstechnischen Anlage, einer chemischen Anlage, einer Raffinerie, einer Brauerei, vorgesehen. Die Ventilkomponentenanordnung umfasst ein Ventilgehäuse zur Durchströmung des Prozessfluids. Das Ventilgehäuse hat einen Ventilgehäuseabschnitt, der einen sich entlang einer Längsachse, insbesondere einer axialen Stellrichtung des Stellventils, erstreckenden Durchgang für die Durchströmung des Prozessfluids aufweist. Des Weiteren hat die Ventilkomponentenanordnung eine an dem Ventilgehäuseabschnitt montierte Ventilkomponente, wie einen Ventilsitz oder einen Ventilkäfig gegebenenfalls mit einem Ventilsitz. Außerdem hat die Ventilkomponentenanordnung eine Ringdichtung zum umfänglichen Abdichten zwischen dem Ventilgehäuseabschnitt und der Ventilkomponente. Erfindungsgemäß hat die Ventilkomponente ein zum Ventilgehäuse strukturell separat ausgebildetes Anpress-Widerlager. Das Anpress-Widerlager ist ein separates Bauteil zum Ventilgehäuseabschnitt, das an dem Ventilgehäuseabschnitt lose anliegen kann, es kann mit diesem auch fest verbunden sein.

Das Anpress-Widerlager begrenzt eine ringförmige Dichtungsaufnahme, in der die Ringdichtung sitzt und die unter Umständen auch von dem Ventilgehäuseabschnitt und der Ventilkomponente begrenzt ist. In dem Einsatzzustand des Anpress-Widerlagers wird letzteres ausschließlich durch axiale Presskräfte gehalten, die ausschließlich von der Ventilkomponente über die Ringdichtung in das Anpress-Widerlager übertragen wird. Insofern ist es ein erfindungsgemäßer Gedanke, das Anpress-Widerlager, welches als Ringelement ausgeführt sein kann, in Axialrichtung lose zwischen dem Ventilgehäuseabschnitt und der Ventilkomponente zu halten, wobei es an Ort und Stelle aufgrund der elastischen Axialverpressung der Ringdichtung und der damit hervorgerufenen elastischen Deformationskräfte gehalten wird. Wäre die Ringdichtung nicht eingesetzt, könnte sich das Anpress-Widerlager innerhalb der Dichtungsaufnahme in Axialrichtung hin und her bewegen. In Radialrichtung kann eine Spielpassung, wenn nicht sogar ein größerer Spalt, zwischen dem Anpress-Widerlager und der Ventilkomponente bzw. dem Ventilgehäuseabschnitt vorgesehen sein.

Es zeigte sich, dass mit diesem Erfindungsgegenstand eine möglichst einfache Montage bei Gewährleistung einer sicheren Dichtungsleistung erreicht werden kann.

Bei einem weiteren Entwicklungsaspekt der Erfindung, der ebenfalls mit den oben genannten Entwicklungsgegenständen kombinierbar ist, ist eine Ventilkomponentenanordnung für ein Stellventil zum Einstellen einer Prozessfluidströmung einer prozesstechnischen Anlage, wie einer verfahrenstechnischen Anlage, einer chemischen Anlage, einer Raffinerie, einer Brauerei, vorgesehen. Die Ventilkomponentenanordnung umfasst ein Ventilgehäuse zur Durchströmung eines Prozessfluids, das einen Ventilgehäuseabschnitt aufweist, der einen sich entlang der Längsachse, insbesondere einer axialen Stellrichtung des Stellventils, erstreckenden Durchgang für die Strömung des Prozessfluids aufweist.

Des Weiteren umfasst die Ventilkomponentenanordnung eine an dem Ventilgehäuseabschnitt montierte Ventilkomponente, wie einen Ventilsitz oder einen Ventilkäfig gegebenenfalls mit Ventilsitz, und eine Ringdichtung zum umfänglichen Abdichten zwischen dem Ventilgehäuseabschnitt und der Ventilkomponente. Erfindungsgemäß wird zwischen der Ventilkomponente und dem Ventilgehäuse beim Montieren ein Eingriffszustand realisiert, der beispielsweise durch einen Gewindeeingriff realisiert ist. Dieser entsteht beim axialen Einsetzen der Ventilkomponente in den Ventilgehäuseabschnitt. Der strukturelle Eingriff, insbesondere Gewindeeingriff, zwischen Ventilgehäuseabschnitt und Ventilkomponente bewirkt eine kontrolliert geführte Führung, insbesondere Drehführung, der Ventilkomponente relativ zu dem Ventilgehäuse, so dass die Ringdichtung nicht aufgrund von Fehlansetzen der Ventilkomponente verletzt wird. Bei einem über dem Eingriffszustand hinaus fortgesetzten axialen Verlagern der Ventilkomponente wird ein Freigabezustand zwischen der Ventilkomponente und dem Ventilgehäuseabschnitt erreicht. Dabei ist der Eingriff zwischen der Ventilkomponente und dem Ventilgehäuse derart freigegeben, dass die Ventilkomponente zur Verkleinerung der Dichtungsaufnahme in Axialrichtung relativ zum Ventilgehäuse longitudinal in Axialrichtung verschoben werden kann. Das damit einhergehende transversale Verschieben der Ventilkomponente kann insbesondere dazu führen, dass die Dichtung in der Dichtungsaufnahme axial zwischen dem Ventilgehäuseabschnitt und der Ventilkomponente verpresst wird. Vorzugsweise ist der Ventilgehäuseabschnitt durch ein separates Anpress-Widerlager gebildet, wie es oben beschrieben ist. Durch das erfindungsgemäße Vorsehen eines ersten Eingriffszustands und anschließenden Freigabezustands, insbesondere nach dem Überdrehen eines Gewindeeingriffs und dem damit einhergehenden Gewindeeingriffsverlust, ist es möglich, einerseits eine sichere und schadenfreie Montage der Ventilkomponentenanordnung zu realisieren, wobei gleichzeitig sichergestellt werden kann, dass beim Demontieren die Eingriffsstruktur eine Mitnehmerfunktion insbesondere für die Ringdichtung realisiert ist.

Die Erfindung betrifft ein Stellventil zum Einstellen einer Prozessfluidströmung einer prozesstechnischen Anlage, das ein Ventilgehäuse mit einem Einlass und einem Auslass für die Prozessfluidströmung aufweist, die die zuvor beschriebene Ventilkomponentenanordnung umfassen. Der Ventilgehäuseabschnitt ist vorzugsweise mit dem übrigen Ventilgehäuse des Stellventils einstückig, insbesondere als Gussteil, gefertigt. Vorzugsweise umfasst das Stellventil ein axial insbesondere innerhalb des Ventilkäfigs bewegliches Ventilglied. Vorzugsweise kann das Ventilglied des Stellventils beweglich sein zwischen einer geschlossenen Stellung, in der das Ventilglied sich in einem abdichtenden Schließkontakteingriff mit dem Ventilsitz des Stellventils befindet, und einer geöffneten Position zum Durchlassen einer Prozessfluidströmung beweglich sein. Die von dem Stellventil bereitgestellte Durchlassfläche für die Prozessfluidströmung kann durch die Stellung, insbesondere den Abstand, des Stellventilglieds zu dem Ventil einstellbar sein. Der Ventilkäfig des Stellventils stellt vorzugsweise eine Drosselwirkung bereit, so dass selbst bei teilweiser oder vollständig geöffneter Ventilgliedstellung mit Hilfe des Ventilkäfigs eine Drosselung des durch den Durchgang strömenden Prozessfluids erfolgt. Vorzugsweise ist das Stellventil mit einem pneumatischen Aktor, wie einem einfachwirkenden pneumatischen Aktor mit Federrückstellung oder einem doppeltwirkenden pneumatischen Aktor mit zwei entgegengesetzt wirkenden pneumatischen Arbeitskammern realisiert.

Weitere Vorteile, Merkmale und Eigenschaften der Erfindung werden durch folgende Beschreibung bevorzugter Ausführungen der Erfindung anhand der beiliegenden Zeichnungen deutlich, in denen zeigen:
- Fig. 1a: eine Schnittansicht eines erfindungsgemäßen Stellventils, dessen Ventilglied sich in einer vollständig geöffneten Stellung befindet;
- Fig. 1b: eine Detailansicht einer erfindungsgemäßen Ventilkomponentenanordnung, gemäß Figur 1a in einem Vormontagezustand;
- Fig. 1c: die Ventilkomponentenanordnung gemäß Fig. 1a in einem Montagezustand bzw. Endmontagezustand;
- Fig.2: eine andere erfindungsgemäße Ausführung einer Ventilkomponentenanordnung in deren Montagezustand;
- Fig.3: eine weitere erfindungsgemäße Ausführung einer Ventilkomponentenanordnung in deren Montagezustand; und
- Fig.4: eine vierte erfindungsgemäße Ausführung einer Ventilkomponentenanordnung in deren Montagezustand.

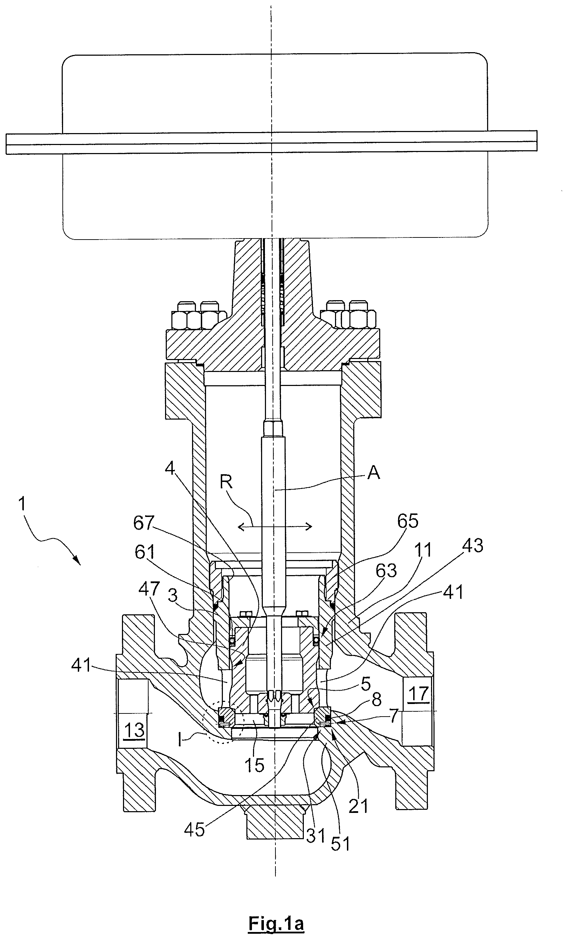

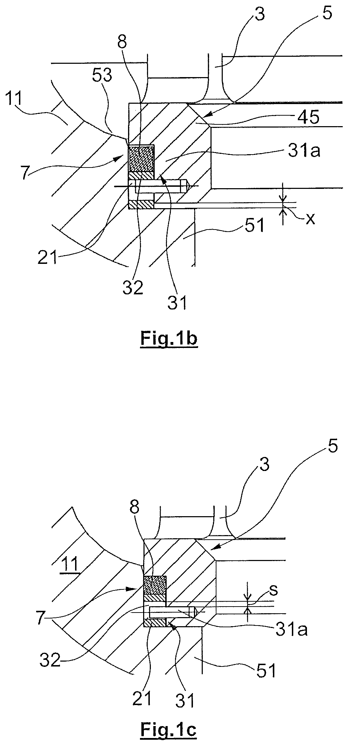

Die in Fig. 1 dargestellte bevorzugte Ausführung eines erfindungsgemäßen Stellventils 1 umfasst als Hauptbestandteil ein Ventilgehäuse 11 mit einem Einlass 13 und einem Auslass 17 für eine Prozessfluidströmung sowie eine in das Ventilgehäuse 11 eingesetzte Ventilkomponente, die einen Ventilkäfig 3 realisiert und einem sich kegelstumpfförmig verjüngenden Abschnitt zum Bereitstellen eines Ventilsitzes 5 aufweist. Das erfindungsgemäße Stellventil umfasst als weiteren Hauptbestandteil eine Dichtung 8, die zum umfänglichen Abdichten zwischen dem Ventilgehäuse 11 und der Ventilkomponente 3, 5 eingesetzt ist sowie ein Anpress-Widerlager, das in Fig. 1a, 1b und 1c gemäß einer ersten bevorzugten Ausführung der Erfindung dargestellt und mit dem Bezugszeichen 21 versehen ist. Fig. 1b und 1c zeigen eine Detailansicht des Stellventils 1 gemäß Fig. 1, welches eine erfindungsgemäße Ventilkomponentenanordnung zeigt.

Das Stellventil 1 ist in Fig. 1a unter Hervorhebung der erfindungsgemäßen Ventilkomponentenanordnung dargestellt, wobei zur einfacheren Lesbarkeit auf eine vollständige Darstellung des Ventilgehäuses 11 und des daran befestigten Ventilantriebs, welcher über eine Ventilstange das zylinderkolbenförmige Ventilglied 4 betätigt, verzichtet ist.

Bei dem Stellventil 1 ist ein exemplarischer Ventilkäfig 3 mit großen, quadratischen Durchlassöffnungen 41 für das Prozessfluid abgebildet. Statt der abgebildeten großen, quadratischen Fenster 41 mit abgerundeten Ecken können anders geformte Fenster, kleinere Durchlasskanäle insbesondere zum Bewirken einer Drosselung, mehr oder weniger Kanäle für den Durchlass von Prozessfluid vom Einlass 13 zum Auslass 17 bereitgestellt sein. Der Ventilkäfig 3 hat eine im Wesentlichen hohlzylindrische Form, wobei die radiale Außenseite des Ventilkäfigs mit dem Ventilgehäusen in Kontakt stehen kann. Insbesondere die in Axialrichtung A stirnseitigen bzw. fußseitigen Enden des Ventilkäfigs 3 sollen in einem zumindest mittelbaren, vorzugsweise unmittelbaren Berührkontakt mit einem Anlageflansch, Deckel oder dergleichen, des Ventilgehäuses 11 stehen. Der Fußabschnitt 45 des Ventilkäfigs 3 ist in Axialrichtung A an einem in Radialrichtung R von dem Ventilgehäuse 11 nach innen ragenden Halteabschnitt oder Flanschabschnitt 51 gehalten, der eine Durchgangsöffnung 15 für die Prozessfluidströmung umfänglich einfasst. Um von dem Einlass 13 zu dem Auslass 17 zu gelangen, muss das Prozessfluid durch den Durchgang 15 und durch die Fenster 41 des Ventilkäfigs 3 strömen.

Die radiale Innenseite 47 des Ventilkäfigs 3 nimmt vorzugsweise formkomplementär das Ventilglied 4 in Axialrichtung A beweglich auf. Zum Bereitstellen einer Dichtwirkung zwischen dem der Innenwand 41 des Ventilkäfigs 3 und dem Ventilglied 4 kann an dem Ventilglied 4 eine Dichtung 61 befestigt, beispielsweise in einer Umfangsnut 63 des Ventilglieds 4 gehalten, sein. Das Ventilglied kann an seinem stirnseitigen Ende eines sich insbesondere kegelabschnittsförmig verjüngenden Bereichs für einen Dichtkontakt mit dem Ventilsitz 5 aufweisen. Der Ventilkäfig 3 kann, wie abgebildet, einstückig oder mehrteilig sein. Zur Montage des Stellventils 1 ist vorzugsweise vorgesehen, dass der Ventilkäfig 3 zwischen einem (nicht näher dargestellten) Ventilgehäusedeckel und dem Ventilgehäuseinnenflansch 51 in Axialrichtung verspannt befestigt wird.

Bei der in Fig. 1a dargestellten bevorzugten Ausführung ist eine Befestigungshülse 65 mit Außengewinden vorgesehen, welche in Eingriff mit einem Innengewinde des Ventilgehäuses 11 steht, um axiale Haltekräfte und Spannkräfte auf den Ventilkäfig 3 auszuüben. Die auf den Ventilkäfig 3 wirkenden axialen Halte- und Spannkräfte werden von dem Ventilkäfig 3 an dessen Fußende 45 an den Dichtring 8 weitergegeben. Zur Demontage des Ventilkäfigs 3 kann die Befestigungshülse 65 aus dem Ventilgehäuse 11 herausgeschraubt werden. Der Ventilkäfig 47 kann in Axialrichtung aus dem Ventilgehäuse 11 entnommen werden. Um die Entnahme aus dem Ventilkäfigs 3 aus dem Gehäuse 11 zu erleichtern, kann der Ventilkäfig 67 an seinem zylindrischen Ventilsitz 5 entfernten Ende 67 eine Einschraubvorrichtung, beispielsweise ein Außengewinde 67, ein Innengewinde, eine Bajonettverbindung oder dergleichen (nicht näher dargestellt) aufweisen.

Fig. 1b und 1c zeigen im Detail die Ventilkomponentenanordnung des Stellventils 1 gemäß Fig. 1a, einerseits im Vormontagezustand (Fig. 1b) und andererseits im Endmontagezustand (Fig. 1c). In dem Vormontagezustand gemäß Fig. 1b ist der Ventilkäfig 3 noch nicht in einem axialen Berührkontakt mit dem Gehäuseinnenflansch 51. In Axialrichtung A ist zwischen dem Gehäuseinnenflansch 51 und dem Ventilkäfig 3 ein axialer Spalt der Höhe x gebildet.

In dem in Fig. 1b dargestellten Vormontagezustand liegt das Anpress-Widerlager 21 bereits an dem Ventilgehäuseinnenflansch 51 vorzugsweise vollumfänglich an. Das Anpress-Widerlager 21 der in Fig. 1a, 1b und 1c dargestellten Ausführung ist ringförmig und weist eine Reihe von umfänglich verteilten Aussparungen 32 auf. In Fig. 1a sind zwei Aussparungen bzw. Ausnehmungen 32 sichtbar, das Anpress-Widerlager 21 kann aber auch eine andere Anzahl von Ausnehmungen 32, beispielsweise drei, vier, fünf, sieben, oder mehr, Ausnehmungen 32 aufweisen. In den Ausnehmungen 32 des Anpress-Widerlagerrings 21 greift jeweils ein Montagestift 31a ein, welcher in eine jeweilige Sacklochbohrung am Fußende 45 des Ventilkäfigs 3 eingepresst ist. Statt der eingepressten Stifte 31a könnten auch in Gewindebohrungen am Fuß 45 des Käfigs 3 eingefügte Madenschrauben oder dergleichen vorgesehen sein.

Der Stift 31a realisiert einen Mitnehmer 31 zum Mitnehmen des Anpress-Widerlagers 21 und des Dichtrings 8 bei der Demontage des Ventilkäfigs 3 aus dem Ventilgehäuse 11. Der Stift 31a ist als Eingriffsteil realisiert, welches radial von dem Fuß 45 des Ventilkäfigs 3 nach außen absteht und in die Ausnehmung 32 des Anpress-Widerlagers 21 ragt. Die Ausnehmung 32 ist mit einem Axialspiel bezüglich des Stiftes 31a ausgebildet, so dass bei der Bewegung des Ventilkäfigs 3 von der Vormontagestellung gemäß Fig. 1b in die Endmontagestellung gemäß Fig. 1c der Stift 31a sich relativ zu dem Anpress-Widerlager 21 in dessen Ausnehmung 32 bewegen kann. Das Axialspiel zwischen dem Stift 31a und dem Anpress-Widerlager 21 ist wenigstens genauso groß wie die Höhe des Axialspalts x. Bevorzugt ist das Axialspiel des beispielsweise als Stift 31a realisierten Eingriffsteil und dem Anpress-Widerlager mit der darin gebildeten Ausnehmung 32 oder dergleichen zumindest geringfügig größer als die axiale Spalthöhe x.

Bei dem in Fig. 1b dargestellten Vormontagezustand ist die Dichtung als Dichtring 8 realisiert und in einer Dichtungsaufnahme 7 angeordnet, die in Radialrichtung R außen begrenzt ist von einem Abschnitt des Ventilgehäuses 11, welcher ausgehend von dessen Innenflansch 51 in Axialrichtung A absteht. Die Dichtaufnahme 7 ist bei den Ausführungen gemäß Fig. 1a bis 1c in Radialrichtung R innen begrenzt durch eine radiale äu-ßere Umfangswand der als Ventilkäfig 3 gebildeten Ventilkomponente. In Axialrichtung A begrenzt zum einen eine Schulterfläche in Form einer ringförmigen axialen Stirnflächenabschnitts der Ventilkomponente die Aufnahme 7. Eine weitere axiale Begrenzung der Dichtungsaufnahme 7 ist realisiert durch das Anpress-Widerlager 21. Es ist auch denkbar, dass das Anpress-Widerlager 21 und der radiale Innenflansch 51 des Ventilgehäuses 11 axiale Begrenzungen der Dichtungsaufnahme 7 bereitstellen (nicht näher dargestellt).

Der Dichtring 8 ist bei den dargestellten Ausführungen als Rotationskörper mit im Wesentlichen quadratischem Querschnitt dargestellt. Es sind auch andere Querschnittsformen denkbar, beispielsweise eine O-Form, eine X-Form oder eine V-Form. Bevorzugt ist der Dichtring 8 aus Graphit gefertigt. Graphitdichtungen sind besonders temperatur- und chemiebeständig.

Wenn beim Montieren der Ventilkomponente der Ventilkäfig 3 diese stirnseitige gegen den Ventilgehäuseabschnitt in Form des radialen Innenflansches 51 gedrückt wird, verschwindet der Spalt zwischen Ventilkomponente und Ventilgehäuse 11. Während der Bewegung des Ventilkäfigs 3 relativ zu dem Ventilgehäuse 11 von dem in Fig. 1b dargestellten Vormontagezustand in den in Fig. 1c dargestellten Montagezustand verbleibt das Anpress-Widerlager relativ zu dem Ventilgehäuse 11 ortsfest. Somit stellt sich eine Relativbewegung zwischen dem Anpress-Widerlager 21 und dem montiert werdenden Ventilkäfig 3 ein. Infolge der Relativbewegung zwischen Ventilkäfig 3 und Anpress-Widerlager 21 erfolgt eine Verkleinerung des Raumes, der als Dichtungsaufnahme 7 bereitsteht, in Axialrichtung A.

Die Dichtung 8 ist vorzugsweise derart bemessen, dass ihre Ausdehnung in Axialrichtung A im Wesentlichen der axialen Höhe der Dichtungsaufnahme 7 im Vormontagezustand entspricht. Die Dichtung 8 kann in Axialrichtung A etwas kleiner sein als die axiale Höhe der Dichtungsaufnahme 7 im Vormontagezustand. Vorzugsweise ist die Dichtung in Axialrichtung A nicht ldeiner als die axiale Höhe der Dichtungsaufnahmenut im Vormontagezustand abzüglich der Höhe des Montagespalts x.

Durch das Überwinden des Montagespaltes x bei der Ventilkomponentenmontage verkleinert sich die Dichtungsaufnahme 7 in Axialrichtung A um die axiale Höhe x des Montagespalts. Das Überwinden dieser Höhendifferenz x verkleinert den Raum der Dichtungsaufnahme, so dass in der Dichtungsaufnahme 7 angeordnete Dichtung 8 in Axialrichtung komprimiert wird. Abhängig von der Kompressibilität der Dichtung 8 stellt sich infolge der Komprimierung des Dichtrings 8 in eine Axialrichtung A vorzugsweise ein Aufweiten des Dichtrings 8 in Radialrichtung R ein. Die Verformung der Dichtung 8 kann insbesondere bewirken, dass die Dichtung 8 in Axialrichtung A sowie gegebenenfalls in Radialrichtung R unmittelbar oder mittelbar zwischen dem Ventilkäfig 3 und dem damit in Eingriff stehenden Abschnitt des Ventilgehäuses 11 in einem abdichtenden Berührkontakt gelangt.

Bei der in Fig. 1b dargestellten bevorzugten Ausführung ist der Dichtring 8 im unverpressten, unmontierten Zustand in Radialrichtung R als die Ausdehnung der Dichtungsaufnahme 7, insbesondere kleiner als der radiale Abstand zwischen der äußeren Umfangswand des Ventilkäfigs 3 und der im montierten Zustand auf selber axialer Höhe liegender Umfangsinnenwand des Ventilgehäuses 11. Es ist denkbar, dass im unmontierten Zustand die Dichtung 8 größer in Radialrichtung R ist als dieser Abstand.

Bei einer derartigen überbreiten Dichtung erfolgt eine radiale Verpressung zwischen der Ventilkomponente und dem Ventilgehäuse bereits vor dem Erreichen des Endmontagezustands sobald ein Ventilkäfig 3 mit daran gehaltener Dichtung 8 in den ausgehend von dem Innenflansch 51 sich in Axialrichtung A erstreckenden Kragen oder Vorsprung des Ventilgehäuses 11 eindringt (nicht näher dargestellt).

In Fig. 1c ist der verpresste Zustand einer Dichtung und der Endmontagezustand der Ventilkomponentenanordnung gezeigt. Im Endmontagezustand füllt die Dichtung 8 den Raum der Dichtungsaufnahme 7 vorzugsweise vollständig aus. Der Stift kann mit der Unterseite der Ausnehmung 32 des Anpress-Widerlagers 21 in Kontakt kommen, oder es kann, wie in Fig. 1c dargestellt, ein geringer Abstand bzw. geringes Axialspiel s zwischen dem Stift 31 und dem unteren Ende der Ausnehmung 32 vorliegen.

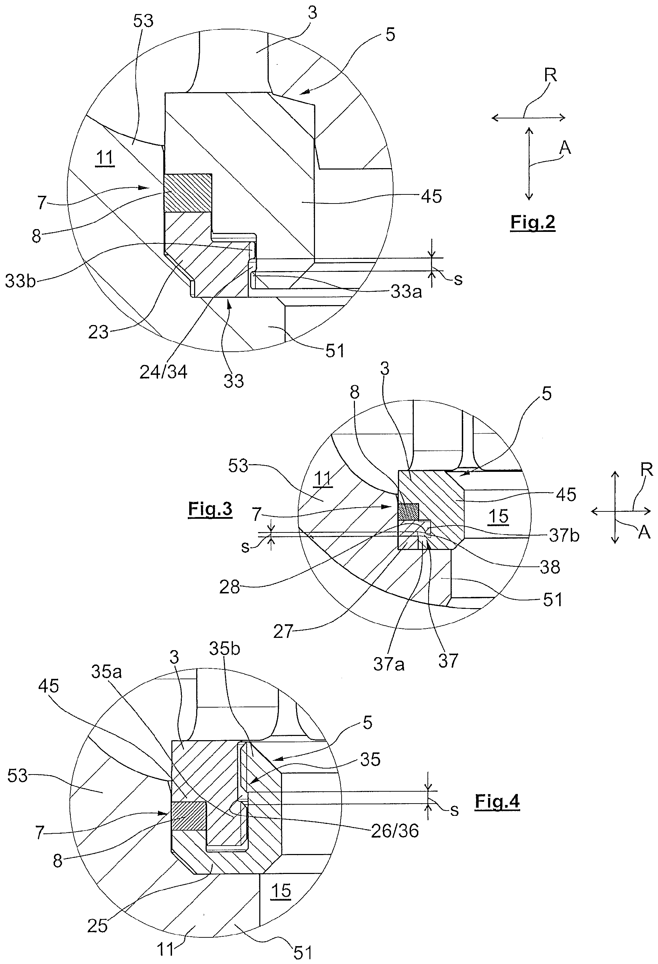

Die in Fig. 2, 3 und 4 dargestellten Ventilkomponentenanordnungen unterscheiden sich von der oben beschriebenen im Wesentlichen nur durch die Form des Anpress-Widerlagers und insbesondere die jeweilige Eingriffsteil-Ausnehmungs-Paarung, weswegen für die unterschiedlichen Eingriffsteile und Ausnehmungen in unterschiedlichen Ausführungen von erfindungsgemäßen Ventilkomponentenanordnungen unterschiedliche Bezugszeichen verwendet werden. Für dieselben oder ähnliche Bauteile sind in den Figuren ähnliche oder identische Bezugszeichen gewählt. Auf die besondere Ausgestaltung der Ventilkomponenten bei der Ausführung gemäß Fig. 4 wird später noch im Detail eingegangen.

Fig. 2, 3 und 4 zeigen die jeweilige Ausführung einer erfindungsgemäßen Ventilkomponentenanordnung nur in dem jeweiligen Endmontagezustand ähnlich dem in Fig. 1c dargestellten. Der Vormontagezustand entsprechend Fig. 1b ist für die einzelnen Ausführungen von Fig. 2, 3 und 4 nicht noch einmal gesondert dargestellt, da es ausgehend von dem dargestellten Endmontagezustand ohne weiteres nachvollziehbar ist, wie der jeweilige Vormontagezustand aussehen würde, in dem das jeweilige Anpress-Widerlager 23, 25 oder 27 gegenüber dem jeweiligen Ventilgehäuseinnenflansch 51 bereits in einem Berührkontakt steht, während noch ein (nicht näher dargestellter) Axialabstand x zwischen der Ventilkomponente im Vormontagezustand zu deren Endmontagestellung verbleibt (vgl. Fig. 1b).

Bei der bevorzugten Ausführung einer Ventilkomponentenanordnung gemäß Fig. 2 ist das Anpress-Widerlager 23 ringförmig und weist an seiner Innenseite einen radial nach außen zurückgesetzten Abschnitt und einen ausgehend von dem zurückgesetzten Abschnitt in Radialrichtung R nach innen vorstehenden, vollständig mit einem Innengewinde 33b realisierten, Radialvorsprung auf. Der Fuß 45 der Ventilkomponente weist einen zu dem Innengewinde 33b des Widerlagers 23 entsprechendes Außengewinde entlang einem stirnseitig am axialen Ende des Fußabschnitts 45 ausgebildeten Gewindeabschnitt 33a auf. Die axiale Höhe des Außengewindeabschnitts 33a ist Kleiner als die axiale Höhe des zurückgesetzten Abschnitts des Anpress-Widerlagers 23, so dass das Außengewinde 33a entlang des zurückgesetzten Abschnitts des Widerlagers 23 gleitend oder mit einem radialen Spiel frei beweglich ist.

In dem in Fig. 2 dargestellten Endmontagezustand ist in Axialrichtung A zwischen dem Außengewindeabschnitt 33a der Ventilkomponente und dem Innengewindeabschnitt 33b ein axiales Spiel s vorgesehen. In dem in Fig. 2 (und entsprechend in Fig. 4) dargestellten Endmontagezustand des Anpress-Widerlagers 23 (25) ist das Gewinde 33a (bzw. 35a) am Fuße 45 des Ventilkäfigs 3 in Axialrichtung A über mehr als eine vollständige Gewinde-Länge auf das Gewinde 33b (bzw. 35b) des Anpress-Widerlagers 23 (bzw. 25) geschraubt und darüber hinweg. Im Endmontagezustand liegt kein Gewindeeingriff der Gewinde des Ventilkäfigs und des Anpress-Widerlagers vor. Zwischen dem Gewinde am Fuß 45 des Ventilkäfigs 3 und dem Gewinde am Anpress-Widerlager 23 oder 25 ist ein Axialspiel s ausgebildet. Da die Gewinde in Axialrichtung A betrachtet einander hinterschneidende Radialvorsprünge bilden, realisieren die Gewinde einen Mitnehmer. Durch diesen Mitnehmer sind der Ventilkäfig 45 und das Anpress-Widerlager 23 oder 25 unverlierbar miteinander verbunden. Zwischen dem Anpress-Widerlager 25 bzw. 23 und dem Fuß 45 des Ventilkäfigs 3 ist im Endmontagezustand der Dichtring 8 verpresst.

Das axiale Spiel s sollte wenigstens so groß sein, dass Montagetoleranzen der Gewindevorsprünge 33a, 33b in Axialrichtung ausgeglichen sind. Vorzugsweise ist der axiale Abstand zwischen den Gewindevorsprüngen 33a, 33b zum Bilden eines axialen Spiels x für den Vormontagezustand vorgesehen. So kann das vollständig auf und über das Außengewinde der Ventilkomponente 3 geschraubte Anpress-Widerlager 23, welches sich wieder in Axialrichtung A ohne Gewindeführung bewegen kann, dazu ausgestaltet, eine Relativbeweglichkeit zwischen dem axialen Anpress-Widerlager 23 und der Ventilkomponente zur Montage der Ventilkomponente gemäß der Erfindung bereitzustellen. Vorzugsweise erfolgt eine Verpressung der Dichtung 8 in der Dichtungsaufnahme 7 zwischen dem Anpress-Widerlager 23 und dem Fuß 45 der Ventilkomponenten in einem Zustand, in dem kein Gewindeeingriff zwischen dem Innengewindeabschnitt 33b und dem Außengewindeabschnitt 33a besteht.

Zur Montage des Widerlagers wird das Anpress-Widerlager 23 mit seinem Gewindeabschnitt 33b über das Gewinde 33b der Ventilkomponente geschraubt, bis es wieder frei von einem Gewindeeingriff zwischen den beiden Teilen ist. Das vorstehende Außengewinde 33a der Ventilkomponente realisiert ein von der Ventilkomponente in Radialrichtung R nach außen vorstehendes Eingriffsteil, das als Mitnehmer 33 dient, welcher in einer Aussparung 24 in Form des in Radialrichtung nach außen zurückgesetzten Abschnitts eingreift. Die nach innen vorstehenden Windungen 33b des Anpress-Widerlagers 23 realisieren eine Hinterschneidung, welche dem Mitnehmen des Anpress-Widerlagers 23 dient.

Die radiale Dichtfläche der Ventilkomponente, an welcher die Dichtung 8 anliegt, hat vorzugsweise einen Außendurchmesser, der zumindest dem Außendurchmesser des Außengewindes 33a entspricht. Vorzugsweise ist der Radius der Dichtfläche geringfügig, insbesondere wenigstens 0,1 mm, größer als der Außendurchmesser des Gewindes 33a, so dass die Dichtung 8 bei demontiertem Anpress-Widerlager 23 einfach in Axialrichtung A aufgeschoben wird, ohne dass die Dichtung 8 durch das Gewinde 33a verletzt werden kann. In Axialrichtung A zwischen dem Außengewinde 33a und dem Dichtabschnitt der Ventilkomponente ist eine Ausnehmung 34 realisiert, in die der Vorsprung 24 mit dem Innengewinde 33 des Anpress-Widerlagers 23 eingreifen kann. Die zurückgesetzte Fläche des Anpress-Widerlagers 23 realisiert gewissermaßen eine Ausnehmung 24 zum Aufnehmen des Mitnehmers 33 in Form des radial vorstehenden Gewindeabschnitts 33a.

Fig. 3 zeigt eine Detailansicht einer erfindungsgemäßen Ventilkomponentenanordnung, bei der das Eingriffsteil 37a als radial nach außen vorstehender Flanschvorsprung 37 am Fuß 45 der Ventilkomponente realisiert ist. In Axialrichtung bildet dieser Flanschvorsprung 37a eine Hinterschneidung 38, in welche ein radial nach innen vorstehender Flanschvorsprung 37b des Anpress-Widerlagers 27 eingreift. Das Anpress-Widerlager 27 kann in die Aussparung 38 am Fuß 45 des Ventilkäfigs 3 beispielsweise durch eine (nicht näher dargestellte) Bajonettverbindung eingesetzt und/oder einstückig sein. Alternativ kann das Anpress-Widerlager 27 sich aus mehreren Teilringabschnitten zusammensetzen, die jeweils in Radialrichtung in den Fuß 45 des Ventilkäfigs 3 eingesetzt sind. Der in Radialrichtung nach innen vorstehende Flanschabschnitt 37b des Anpress-Widerlagers 27 und der radial nach außen vorstehende Flanschabschnitt 37a der Ventilkomponente weisen einander in Axialrichtung A gegenüberliegende Kontaktflächen auf, die eine kegelstumpfförmige Oberfläche haben, welche je einen Kegelwinkel bezüglich der axialen Achse A aufweisen, welche zumindest nahezu, vorzugsweise vollständig gleich sind. Die Neigung der Kontaktfläche weist vorzugsweise einen um wenigstens 2°, vorzugsweise zwischen 5° und 10°, möglicherweise bis zu 45° geneigten Winkel auf, so dass in Radialrichtung R eine Hinterschneidung realisiert ist, welche einem axialen und/oder radialen Abgleiten des Anpress-Widerlagers 27 von der Ventilkomponente entgegenwirkt.

Die zu dem Dichtkörper 8 weisende Dichtfläche des Anpress-Widerlagers 27 ist vorzugsweise in Radialrichtung R ldeiner bemessen als der Abstand der in Radialrichtung weisenden umfänglichen Dichtfläche der Ventilkomponente zu der dazu gegenüberliegenden in Radialrichtung weisenden Innenumfangsfläche der Schulter 53 des Ventilgehäuses 11, so dass eine axiale Beweglichkeit des Anpress-Widerlagers 27 ohne einen Berührkontakt zwischen dem Widerlager 27 und der Ventilkomponente sichergestellt ist. Zwischen dem nach innen weisenden Flansch 37b des Anpress-Widerlagers 27 und dem nach außen weisenden Flansch 37a der Ventilkomponente ist in Axialrichtung A eine Ausnehmung 38 realisiert, die ein axiales Spiel x bereitstellt, um eine Relativbewegung zwischen dem Anpress-Widerlager 27 und der Ventilkomponente beim Verbringen der Ventilkomponente aus einem Vormontagezustand in den in Fig. 3 dargestellten Endmontagezustand zuzulassen. Die Ventilkomponente weist in Axialrichtung A zwischen ihrem radial vorstehenden Flansch 37a und dem übrigen Körper eine Ausnehmung 38 zum Aufnehmen des Flansches 37 des Widerlagers 27 auf. Das Widerlager 27 bildet in Axialrichtung A eine Ausnehmung 27 für den radialen Vorsprung 37a der Ventilkomponente aus.

Fig. 4 unterscheidet sich von den zuvor beschriebenen erfindungsgemäßen Ausführungen von Ventilkomponentenanordnungen im Wesentlichen dadurch, dass der Ventilsitz 5 und der Ventilkäfig 3 durch getrennte Bauteile realisiert sind. Bei den in Fig. 1a bis 1c, 2 und 3 dargestellten Ausführungen ist der Ventilsitz einstückig mit dem Ventilkäfig 3 realisiert. Der Ventilsitz 5 ist bei der in Fig. 4 dargestellten Ausführung einstückig mit dem Anpress-Widerlager 25 realisiert. Der Fuß 45 des Ventilkäfigs 3 ist in einer Ausnehmung 26 der etwa L-förmigen Einheit aus Anpress-Widerlager 25 und Ventilkäfig 5 in Axialrichtung gehalten. Ähnlich wie bei der in Fig. 3 beschriebenen Ausführung sind radial nach innen bzw. radial nach außen vorstehende Flanschabschnitte einerseits an dem Anpress-Widerlager 25 und andererseits an dem Ventilkäfig 3 vorgesehen, welche in Axialrichtung A voneinander beabstandet sind, so dass ein ausreichendes Axialspiel x (nicht näher dargestellt) bereitgestellt ist, damit beim Einsetzen der Ventillcomponenten eine Anpress-Bewegung zum Verpressen der Dichtung 8 zwischen dem (nicht näher dargestellten) Vormontagezustand und dem in Fig. 4 abgebildeten Endmontagezustand realisierbar ist.

Bei der in Fig. 4 dargestellten bevorzugten Ausführung einer Ventilkomponentenanordnung ist es das Anpress-Widerlager 25, was einen radial nach außen vorstehenden Flanschabschnitt 35b aufweist, welche mit einem radial nach innen vorstehenden Flanschabschnitt 35a des Ventilkäfigs 3 kooperiert. Zur Montage des Widerlagers 25 ist eine bajonettartige Verbindung bevorzugt. Der radial nach außen weisende Flanschvorsprung 35b, der in Axialrichtung etwa auf Höhe des Ventilsitzes 5 angeordnet ist, realisiert den Mitnehmer 35, der das Anpress-Widerlager 25 beim Montieren des Ventilkäfigs 3 an diesem festhält, so dass von dem Anpress-Widerlager 25 auch die Dichtung 8 mitgenommen wird, also auch mit dem Ventilkäfig 3 mitgenommen wird.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Stellventil
- 3: Ventilkäfig
- 4: Ventilglied
- 5: Ventilsitz
- 7: Dichtungsaufnahme
- 8: Dichtring
- 11: Ventilgehäuse
- 13: Einlass
- 15: Durchgangsöffnung
- 17: Auslass
- 21, 23, 25, 27: Anpress-Widerlager
- 31: Mitnehmer
- 31a: Stift
- 32, 34: Ausnehmung
- 33: Mitnehmer
- 37: Flanschvorsprung
- 38: Hinterschneidung
- 41: Durchlaufsöffnung
- 45: Fußabschnitt
- 47: Innenseite
- 51: Flanschabschnitt
- 53: Schulter
- 61: Dichtung
- 63: Umfangsnut
- 65: Befestigungshülse
- 67: Außengewinde

## Patentansprüche

1. Stellventil zum Einstellen einer Prozessfluidströmung einer prozesstechnischen Anlage, wobei das Stellventil (1) ein Ventilgehäuse (11) mit einem Einlass (13) und einem Auslass (17) für die Prozessfluidströmung aufweist sowie eine Ventilkomponentenanordnung für ein Stellventil (1) zum Einstellen einer Prozessfluidströmung einer prozesstechnischen Anlage, wobei das Stellventil (1) ein Ventilgehäuse (11) mit einem Einlass (13) und einem Auslass (17) für die Prozessfluidströmung aufweist, umfassend:
- einen Ventilgehäuseabschnitt mit einem sich entlang einer Längsachse (A) erstreckenden Durchgang (15) für die Prozessfluidströmung;
- eine an dem Ventilgehäuseabschnitt montierbare Ventilkomponente,
- eine Dichtung (8) zum umfänglichen Abdichten zwischen dem Ventilgehäuseabschnitt und der Ventilkomponente, und
- ein Anpress-Widerlager (21, 23, 25, 27), das in Axialrichtung (A) zwischen der Dichtung (8) und dem Ventilgehäuseabschnitt anzuordnen ist und das in einem Vormontagezustand relativ zu dem Ventilgehäuseabschnitt und relativ zu der Ventilkomponente beweglich ist,
wobei in einem Montagezustand die Dichtung (8) eingesetzt ist in eine ringnutförmige Dichtungsaufnahme (7), die von der Ventilkomponente, dem Ventilgehäuseabschnitt und dem Anpress-Widerlager (21, 23, 25, 27) begrenzt ist;
wobei das Anpress-Widerlager (21, 23, 25, 27) durch einen Mitnehmer (31, 33, 35, 37) axialbeweglich an der Ventilkomponente gehalten ist, wobei der Mitnehmer (31, 33, 35, 37) dazu ausgelegt ist, bei Demontage der Ventilkomponente das Anpress-Widerlager (21, 23, 25, 27) mit der Ventilkomponente mitzunehmen, **dadurch gekennzeichnet, dass** der Ventilgehäuseabschnitt, die Ventilkomponente und das Anpress-Widerlager (21, 23, 25, 27) derart auf einander abgestimmt sind, dass sich die Dichtungsaufnahme (7) beim Montieren der Ventilkomponente an dem Ventilgehäuseabschnitt verkleinert, wobei das Anpress-Widerlager (21, 23, 25, 27) an dem Ventilgehäuse (11) abgestützt ist und wobei das Anpress-Widerlager (21, 23, 25, 27) eine Relativbewegung bezüglich der Ventilkomponente erfährt.

2. Stellventil nach Anspruch 1, wobei der Ventilgehäuseabschnitt, die Ventilkomponente und das Anpress-Widerlager (21, 23, 25, 27) derart auf einander abgestimmt sind, dass sich die Dichtungsaufnahme (7) beim Montieren der Ventilkomponente an dem Ventilgehäuseabschnitt zum Verpressen der Dichtung (8) verkleinert, wobei in dem Montagezustand die Dichtung (8) in Axialrichtung (A) komprimiert und gegebenenfalls in Radialrichtung (R) geweitet ist.

3. Stellventil nach Anspruch 1 oder 2, wobei der an der Ventilkomponente angeordnete Mitnehmer (31, 33, 35, 37) dazu ausgelegt ist, bei Demontage der Ventilkomponente die Dichtung (8) mit der Ventilkomponente mitzunehmen.

4. Stellventil nach einem der Ansprüche 1 bis 3, wobei das Anpress-Widerlager dazu ausgelegt ist, sich beim Einsetzen der Ventilkomponente in das Ventilgehäuse und bis zum axialen Inkontaktbringen der Ventilkomponente mit dem Ventilgehäuseabschnitt zur abschließenden Montage und dem Erreichen des Betriebszustandes, derart an dem Ventilgehäuseabschnitt abzustützen und eine Relativbewegung bezüglich der Ventilkomponente zu erfahren, dass die Dichtungsaufnahme verkleinert wird.

5. Stellventil nach einem der vorstehenden Ansprüche, wobei das Anpress-Widerlager (23) und/oder der Mitnehmer (31, 33, 35, 37) durch eine in Axialrichtung (A) lösbare Verbindung an der Ventilkomponente gehalten ist.

6. Stellventil nach einem der vorstehenden Ansprüche, wobei das Anpress-Widerlager (21, 27) und/oder der Mitnehmer (31, 33, 35, 37) durch eine in Radialrichtung (R) lösbare Verbindung an der Ventilkomponente, beispielsweise mit Stiften (31a), gehalten ist.

7. Stellventil nach einem der vorstehenden Ansprüche, wobei der Mitnehmer (31, 33, 35, 37) wenigstens ein radial von der Ventilkomponente abstehendes Eingriffsteil aufweist und wobei das Anpress-Widerlager (21, 23, 25, 27) wenigstens eine axiale Hinterschneidung zum Aufnehmen des Eingriffsteils aufweist, die in Axialrichtung (A) größer ist als das aufgenommene Eingriffsteil.

8. Stellventil nach Anspruch 7, wobei die axiale Hinterschneidung eine zu dem wenigstens einen Eingriffsteil formkomplementäre Ausnehmung (22, 24, 26, 28, 32, 34, 36, 38) ist.

9. Stellventil nach einem der vorstehenden Ansprüche, wobei das Anpress-Widerlager (21, 23, 25, 27) ringförmig ist und einstückig oder mehrteilig aus Teilkreisabschnitten ist.

10. Stellventil nach einem der vorstehenden Ansprüche, wobei die Ventilkomponente durch einen Ventilkäfig (3) realisiert ist und das Anpress-Widerlager (25) einstückig mit einem Ventilsitz (5) gebildet ist.

11. Stellventil nach einem der vorstehenden Ansprüche, umfassend ein Ventilgehäuse (11) zur Durchströmung eines Prozessfluids, das einen Ventilgehäuseabschnitt aufweist, der einen sich entlang einer Längsachse (A) erstreckenden Durchgang für die Durchströmung des Prozessfluids aufweist,
eine an dem Ventilgehäuseabschnitt montierte Ventilkomponente,
eine Ringdichtung (8) zum umfänglichen Abdichten zwischen dem Ventilgehäuseabschnitt und der Ventilkomponente,
ein zum Ventilgehäuseabschnitt strukturell separates Anpress-Widerlager, das eine ringförmige Dichtungsaufnahme, in dem die Ringdichtung (8) sitzt, in axialer Richtung begrenzt und in dessen Einsatzzustand in Axialrichtung durch axiale Presskräfte gehalten ist, die ausschließlich von der Ventilkomponente über die Ringdichtung an das Anpress-Widerlager übertragen sind.

## Claims

1. Control valve for adjusting a process fluid flow of a process plant, wherein the control valve (1) comprises a valve housing (3) with an inlet (13) and an outlet (17) for the process fluid flow as well as a valve component arrangement for a control valve (1) for adjusting a process fluid flow of a process plant, the control valve (1) having a valve housing (11) with an inlet (13) and an outlet (17) for the process fluid flow, comprising:
- a valve housing portion having a passage (15) for the process fluid flow extending along a longitudinal axis (A),
- a valve component mountable on the valve housing portion,
- a seal (8) for circumferentially sealing between the valve housing portion and the valve component, and
- a contact abutment (21, 23, 25, 27) to be disposed in the axial direction (A) between the seal (8) and the valve housing portion and which is movable in a pre-assembled state relative to the valve housing portion and relative to the valve component,
wherein in an assembled state the seal (8) is inserted into an annular-groove-shaped seal receptacle (7) limited by the valve component, the valve housing portion and the contact abutment (21, 23, 25, 27);
wherein the contact abutment (21, 23, 25, 27) is held axially movable to the valve component by a carrier (31, 33, 35, 37), wherein the carrier (31, 33, 35, 37) is designed to carry the contact abutment (21, 23, 25, 27) with the valve component when the valve component is removed,
**characterized in that** the valve housing portion, the valve component and the contact abutment (21, 23, 25, 27) are matched to each other in such a way that the seal receptacle (7) is reduced in size when the valve component is mounted on the valve housing portion, wherein the contact abutment (21, 23, 25, 27) is supported on the valve housing (11) and wherein the contact abutment (21, 23, 25, 27) undergoes a relative movement with respect to the valve component.

2. Control valve according to claim 1, wherein the valve housing portion, the valve component and the contact abutment (21, 23, 25, 27) are matched to each other such that the seal receptacle (7) is reduced when the valve component is mounted on the valve housing portion for pressing the seal (8), wherein in the mounted state the seal (8) is compressed in the axial direction (A) and optionally expanded in the radial direction.

3. Control valve according to claim 1 or 2, wherein the carrier (31, 33, 35, 37) arranged on the valve component is designed to carry the seal (8) with the valve component when the valve component is removed.

4. Control valve according to one of the claims 1 to 3, wherein the contact abutment is adapted to bear against the valve housing portion during insertion of the valve component into the valve housing and until the valve component is brought into axial contact with the valve housing section for final assembly and reaching the operating state and to undergo a relative movement with respect to the valve component in such a way that the seal receptable is reduced in size.

5. Control valve according to one of the preceding claims, wherein the contact abutment and/or the carrier (31, 33, 35, 37) is held to the valve component by a connection detachable in the axial direction (A).

6. Control valve according to one of the preceding claims, wherein the contact abutment (21, 27) and/or the carrier (31, 33, 35, 37) is held to the valve component, for example with pins, by a connection detachable in the radial direction (R).

7. Control valve according to one of the preceding claims, wherein the carrier (31, 33, 35, 37) comprises at least one engaging part radially protruding from the valve component and wherein the contact abutment (21, 23, 25, 27) comprises at least an axial undercut, in particular for receiving the engaging part, the undercut being larger in the axial direction (A) than the received engaging part.

8. Control valve according to claim 7, wherein the axial undercut is a recess (22, 24, 26, 28, 32, 34, 36, 38) which is complementary in shape to the at least one engaging part.

9. Control valve according to one of the preceding claims, wherein the contact abutment (21, 23, 25, 27) is annular and one-piece or multi-part of pitch circle sections.

10. Control valve according to one of the preceding claims, wherein the valve component is realized by a valve cage (3) and the contact abutment (25) is formed in one piece with a valve seat (5).

11. Control valve according to one of the preceding claims, comprising a valve housing (11) for flowing through a process fluid, which has a valve housing portion which has a passage for the flow of the process fluid extending along a longitudinal axis (A),
a valve component mounted on the valve housing portion,
a ring seal (8) for circumferential sealing between the valve housing portion and the valve component,
a contact abutment structurally separate from the valve housing portion, which limits an annular seal receptacle in which the ring seal (8) is seated in the axial direction and is held in its operational state in the axial direction by axial pressing forces which are transmitted exclusively from the valve component via the ring seal to the contact abutment.

## Revendications

1. Soupape de réglage, destinée à régler un écoulement de fluide de procédé dans une installation en génie des procédés, la soupape de réglage (1) comportant un corps de soupape (11) pourvu d'une entrée (13) et d'une sortie (17) pour l'écoulement de fluide de procédé, ainsi qu'un ensemble de composants de soupape pour une soupape de réglage (1) destinée à régler un écoulement de fluide de procédé d'une installation en génie des procédés, la soupape de réglage (1) comportant un corps de soupape (11) pourvu d'une entrée (13) et d'une sortie (17) pour l'écoulement de fluide de procédé, comprenant :
- une partie de corps de soupape pourvue d'un passage (15) s'étendant le long d'un axe longitudinal (A) pour l'écoulement de fluide de procédé ;
- un composant de soupape susceptible d'être monté sur la partie de corps de soupape,
- un joint (8), destiné à assurer l'étanchéité périphérique entre la partie de corps de soupape et le composant de soupape, et
- une butée de pression (21, 23, 25, 27), qui dans la direction axiale (A) doit être placée entre le joint (8) et la partie de corps de soupape et qui lorsqu'elle est préalablement montée, est mobile par rapport à la partie de corps de soupape et par rapport au composant de soupape,
lorsqu'il est monté, le joint (8) étant inséré dans un logement de joint (7) en forme de rainure annulaire, qui est délimité par le composant de soupape, par la partie de corps de soupape et par la butée de pression (21, 23, 25, 27) ;
la butée de pression (21, 23, 25, 27) étant maintenue sur le composant de soupape en étant mobile en direction axiale par un entraîneur (31, 33, 35, 37), l'entraîneur (31, 33, 35, 37) étant conçu pour entraîner la butée de pression (21, 23, 25, 27) avec le composant de soupape lors du démontage du composant de soupape, **caractérisée en ce que** la partie de corps de soupape, le composant de soupape et la butée de pression (21, 23, 25, 27) sont adaptés les uns aux autres de telle sorte que lors du montage du composant de soupape sur la partie de corps de soupape, le logement de joint (7) rétrécisse, la butée de pression (21, 23, 25, 27) étant soutenue sur le corps de soupape (11) et la butée de pression (21, 23, 25, 27) subissant un déplacement relatif par rapport au composant de soupape.

2. Soupape de réglage selon la revendication 1, la partie de corps de soupape, le composant de soupape et la butée de pression (21, 23, 25, 27) étant adaptés les uns aux autres de telle sorte que lors du montage du composant de soupape sur la partie de corps de soupape, le logement de joint (7) rétrécisse, pour compresser le joint (8), lorsqu'il est monté, le joint (8) étant comprimé dans la direction axiale (A) et le cas échéant, étant élargi dans la direction radiale (R) .

3. Soupape de réglage selon la revendication 1 ou 2, l'entraîneur (31, 33, 35, 37) placé sur le composant de soupape étant conçu pour entraîner le joint (8) avec le composant de soupape lors du démontage du composant de soupape.

4. Soupape de réglage selon l'une quelconque des revendications 1 à 3, lors de l'insertion du composant de soupape dans le corps de soupape et jusqu'à la mise en contact axiale du composant de soupape avec la partie de corps de soupape, pour terminer le montage et atteindre l'état de service, la butée de pression étant conçue pour se soutenir sur la partie de corps de soupape et subir un déplacement relatif par rapport au composant de soupape, de telle sorte que le logement de joint rétrécisse.

5. Soupape de réglage selon l'une quelconque des revendications précédentes, la butée de pression (23) et / ou l'entraîneur (31, 33, 35, 37) étant maintenu(e) sur le composant de soupape par une liaison amovible dans la direction axiale (A).

6. Soupape de réglage selon l'une quelconque des revendications précédentes, la butée de pression (21, 27) et / ou l'entraîneur (31, 33, 35, 37) étant maintenu(e) sur le composant de soupape par une liaison amovible dans la direction radiale (R), par exemple par des goujons (31a).

7. Soupape de réglage selon l'une quelconque des revendications précédentes, l'entraîneur (31, 33, 35, 37) comportant au moins une partie d'engagement débordant en direction radiale du composant de soupape et la butée de pression (21, 23, 25, 27) comportant au moins une contre-dépouille axiale, destinée à réceptionner la partie d'engagement, qui dans la direction axiale (A) est plus grande que la partie d'engagement réceptionnée.

8. Soupape de réglage selon la revendication 7, la contre-dépouille axiale étant un évidement (22, 24, 26, 28, 32, 34, 36, 38) de forme complémentaire à celle de l'au moins une partie d'engagement.

9. Soupape de réglage selon l'une quelconque des revendications précédentes, la butée de pression (21, 23, 25, 27) étant de forme annulaire et en monobloc ou en plusieurs éléments, en portions de cercle.

10. Soupape de réglage selon l'une quelconque des revendications précédentes, le composant de soupape étant réalisé par une cage de soupape (3) et la butée de pression (25) étant constituée en monobloc avec un siège de soupape (5).

11. Soupape de réglage selon l'une quelconque des revendications précédentes comprenant
un corps de soupape (11), destiné à faire passer un fluide de procédé, qui comporte une partie de corps de soupape qui comporte un passage s'étendant le long d'un axe longitudinal (A) pour faire passer le fluide de procédé,
un composant de soupape monté sur la partie de corps de soupape,
un joint annulaire (8), destiné à assurer l'étanchéité périphérique entre la partie de corps de soupape et le composant de soupape,
une butée de pression, structurellement séparée de la partie de corps de soupape, qui délimite dans la direction axiale un logement de joint de forme annulaire dans lequel est posé le joint annulaire (8) et lorsqu'il est utilisé est maintenu dans la direction axiale par des forces de pression axiales, qui sont transmises exclusivement par le composant de soupape par l'intermédiaire du joint annulaire sur la butée de pression.
